# EUROPEAN PATENT SPECIFICATION

(11) **EP 4 280 573 B1**
(45) Date of publication and mention of the grant of the patent: **06.05.2026**
(21) Application number: 23174221.4
(22) Date of filing: 19.05.2023
(51) Int. Cl.: H04L 67/12

(54) **METHOD FOR RETURNING DATA ON VEHICLE, CONTROLLER ON VEHICLE, CLOUD SERVER, AND VEHICLE**
VERFAHREN ZUR RÜCKGABE VON DATEN IN EINEM FAHRZEUG, STEUERGERÄT IN EINEM FAHRZEUG, CLOUD-SERVER UND FAHRZEUG
PROCÉDÉ DE RENVOI DE DONNÉES SUR UN VÉHICULE, DISPOSITIF DE COMMANDE SUR UN VÉHICULE, SERVEUR EN NUAGE ET VÉHICULE

(30) Priority: 19.05.2022 CN 202210557010
(43) Date of publication of application: 22.11.2023
(73) Proprietor: Anhui NIO Autonomous Driving Technology Co., Ltd., Hefei, Anhui 230601 (CN)
(72) Inventor: ZHOU, Jia, Jiading Shanghai (CN); LIU, Guoyi, Jiading Shanghai (CN); SHE, Xiaoli, Jiading Shanghai (CN); REN, Shaoqing, Jiading Shanghai (CN)
(74) Representative: Vossius & Partner Patentanwälte Rechtsanwälte mbB

(56) References cited:
- CN-A- 111 178 454
- US-A1- 2021 294 320
- US-A1- 2021 323 575

## Description

### Technical Field

The disclosure relates to the field of autonomous driving technologies, and specifically provides a method and system for returning data on the vehicle, a controller on the vehicle, a cloud server, and a vehicle.

### Background Art

Intelligent driving technologies such as autonomous driving technologies and auxiliary driving technologies have been favored by the majority of vehicle owners. Existing data collection methods directly set scenario data that needs to be collected and collection parameters on the vehicle when a vehicle leaves the factory. However, collection for some new scenarios can only be implemented by manufacturers through irregular upgrade and iteration of software on the vehicle. Due to little scenario data, slow data return, difficulty in algorithm iteration and the like, poor optimization of algorithms, insufficient accuracy in autonomous driving decision-making, and other problems are further caused, affecting driving experience of users.

US 2021/323575 A1 discloses a data acquisition method and apparatus, which comprises: determining configuration information in response to a first input operation acting on an interface, where the configuration information includes data acquisition parameters; creating a data acquisition task in response to task creation instructions, where the configuration information in a current interface is data included in the data acquisition task; constructing and obtaining a task table according to at least one of the data acquisition tasks; and sending the task table to a vehicle terminal, where the task table is used to indicate the vehicle terminal to perform the data acquisition during a driving process of a vehicle.

Accordingly, there is a need for a new solution for returning data to solve the above problem in the art.

### Summary

The subject-matter of the present invention is defined by the features of the independent claims. Further preferred embodiments of the present invention are defined in the dependent claims. In particular, to overcome the above defects, the disclosure is proposed to solve or at least partially solve the problem of how to quickly and accurately return data to improve the data validity and accelerate the optimization of algorithms for autonomous driving.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:
FIG. 1 is a schematic flowchart of main steps of a method for returning data on the vehicle according to an embodiment of the disclosure;
FIG. 2 is a schematic flowchart of main steps of a method for returning data on the vehicle according to another embodiment of the disclosure;
FIG. 3 is a schematic flowchart of main steps of a method for returning data on the vehicle according to an implementation of an embodiment of the disclosure;
FIG. 4 is a block diagram of a main structure of a system for returning data on the vehicle according to an embodiment of the disclosure; and
FIG. 5 is a block diagram of a main structure of a system for returning data on the vehicle according to an implementation of an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program codes, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

The continuous development of the advanced driver assistance technology has brought more convenience to people. Due to the difficulty in iteration of algorithms for autonomous driving, little data, and the like, the function of autonomous driving is affected, affecting user experience. Therefore, data on the vehicle during actual running of a vehicle needs to be effectively returned to optimize algorithms for autonomous driving. In the prior art, the OTA technology is generally used to preset required related parameters of data on a vehicle, and the vehicle returns the data based on the related parameters. However, this method can only implement fixed return of the data on the vehicle, and cannot flexibly configure return parameters, which limits the optimization speed of the algorithms for autonomous driving.

Therefore, there is a need for a new method for returning data on the vehicle to solve the above problem in the art.

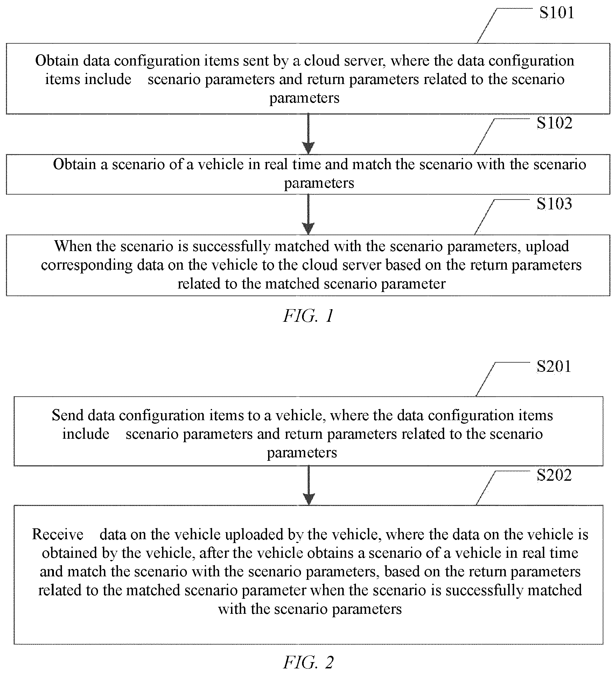

FIG. 1 is a schematic flowchart of main steps of a method for returning data on the vehicle according to an embodiment of the disclosure. As shown in FIG. 1, the method for returning data on the vehicle in the embodiment of the disclosure is applied to a vehicle, and the method mainly includes steps S101 to S103 below.

In step S101, data configuration items sent by a cloud server are obtained, where the data configuration items include scenario parameters and return parameters related to the scenario parameters.

In this embodiment, the cloud server may send the data configuration items to the vehicle according to requirements of practical application, and the data configuration items may include scenarios parameter and return parameters related to the scenario parameters. In other words, different scenario parameters may correspond to different return parameters.

The scenario parameters refer to a scenario that require data return. The return parameters include data on the vehicle that needs to be returned for the matched scenario. Preferably, the return parameters may further include the number of daily collection times, a minimum collection time interval, a return priority, and the like of data on the vehicle.

In an implementation, the vehicle may obtain, through an intelligent gateway, the data configuration items sent by the cloud server.

In step S102, a scenario of a vehicle is obtained in real time and matched with the scenario parameters.

In this embodiment, the scenario of the vehicle may be obtained in real time and matched with the scenario parameters sent by the cloud server.

In an implementation, a preset model may be used to obtain the scenario of the vehicle in real time and match the scenario with the scenario parameters sent by the cloud server.

In step S103, when the scenario is successfully matched with the scenario parameters, corresponding data on the vehicle is uploaded to the cloud server based on the return parameters related to the matched scenario parameter.

In this embodiment, when the scenario of the vehicle is successfully matched with the scenario parameters sent by the cloud server, the corresponding data on the vehicle may be uploaded to the cloud server based on the return parameters related to the matched scenario parameters.

Based on the steps S101 to S103, the cloud server can send data configuration items according to actual requirements, the data configuration items including the scenario parameters and the return parameters related to the scenario parameters, the scenario of the vehicle is obtained in real time and matched with the scenario parameters, and when the scenario is successfully matched with the scenario parameters, the corresponding data on the vehicle is uploaded to the cloud server based on the return parameters related to the matched scenario parameter. Through the above configurations, according to this embodiment of the disclosure, the data on the vehicle can be flexibly, quickly, and accurately uploaded to the cloud server according to the requirements of the cloud server and can be returned without using the OTA technology, which can improve the data validity more effectively and accelerate the optimization of algorithms for autonomous driving.

Step S102 and step S 103 will be further described below.

In an implementation of this embodiment of the disclosure, the data on the vehicle may include a signal on the vehicle and a sensor detected signal on the vehicle; and step S 102 may include the following steps:
performing real-time fusion on the signal on the vehicle and the sensor detected signal on the vehicle to obtain the scenario of the vehicle.

In this implementation, the signal on the vehicle and the sensor detected signal on the vehicle may be fused in real time to obtain the scenario of the vehicle.

In an implementation, feature extraction may be performed by using a model based on a convolutional neural network, then target detection is performed by using a regional candidate network and a detector, so as to complete a perception algorithm, and finally, the signal on the vehicle and the sensor detected signal on the vehicle are fused in real time.

In an implementation, the signal on the vehicle may include, but is not limited to, at least one of a CAN signal, an RTK signal, and an IMU signal on the vehicle.

The sensor detected signal on the vehicle may include, but is not limited to, detected signals from at least one of a camera on the vehicle, a radar on the vehicle, and a GPS.

For example, when the vehicle enters a tunnel, information about a map position where the vehicle is located can be obtained by using the GPS, a tunnel identifier can be obtained based on an image taken by the camera on the vehicle, and it can be learned that headlights are turned on. These signals are fused to determine that the vehicle is in a tunnel scenario.

However, those skilled in the art can clearly understand that the scenarios in this embodiment of the disclosure may further include weather scenarios such as raining and the like in addition to the above spatial scenario.

In an implementation of this embodiment of the disclosure, step S103 may include step S 1031 and step S 1032 below.

In step S 1031, the corresponding data on the vehicle is collected and stored based on the return parameters.

In this implementation, the corresponding data on the vehicle may be collected and stored based on the return parameters sent by the cloud server. The return parameters may include the data on the vehicle that needs to be returned for the matched scenario. Further, the return parameters may further include one or more of the number of daily collection times, a minimum collection time interval, and a return priority of the data on the vehicle. In other words, the data on the vehicle that needs to be returned for the matched scenario, the number of daily collection times, the minimum collection time interval, and the return priority will be specified in the return parameters sent by the cloud server.

In step S 1032, stored data on the vehicle that needs to be returned for each of different scenarios is uploaded to the cloud server based on return parameters for the scenario.

In this implementation, the data on the vehicle that is stored based on the return parameters and needs to be returned for each of different scenarios may be uploaded to the cloud server based on the corresponding return priority of the data.

For example, if data on the vehicle for the tunnel scenario needs to be collected, the scenario parameter in the data configuration items refer to the tunnel scenario. The return parameters include the data on the vehicle that needs to be returned for the tunnel scenario and includes detected signals and the like collected by a camera on the vehicle, a radar on the vehicle, and a GPS. The number of daily collection times, a minimum collection time interval, and a return priority of the data on the vehicle are respectively five times, two hours, and level 1. The data collected and stored on the vehicle may be uploaded to the cloud server based on the return parameters.

In an implementation of this embodiment of the disclosure, the disclosure may include step S104 to step S 106 below in addition to the above step S 101 to step S103.

In step S104, when there is data missing in the collected and stored data on the vehicle, whether a proportion of data missing is higher than a preset proportion threshold is determined; if the proportion of data missing is higher than the preset proportion threshold, step S 106 is performed; or if the proportion of data missing is not higher than the preset proportion threshold, step S105 is performed.

In step S105, a data missing prompt message is sent to the cloud server, and the obtained data on the vehicle is uploaded to the cloud server based on feedback information from the cloud server.

In step S106, the data on the vehicle is not uploaded to the cloud server, and fault warning information is sent.

In this implementation, the vehicle may perform integrity check on the collected data on the vehicle to determine whether there is data missing in the collected data on the vehicle. When there is data missing in the data on the vehicle, the proportion of data missing is compared with the preset proportion threshold. If the proportion of data missing is higher than the proportion threshold, it indicates that the collected data on the vehicle has no application value, and there is no need to upload the collected data on the vehicle to the cloud server, such that the vehicle sends the fault warning information to prompt fault repair. If the proportion of data missing is less than or equal to the proportion threshold, it indicates that the collected data on the vehicle has application value, such that the vehicle sends the data missing prompt message to the cloud server, and the cloud server determines whether the collected data on the vehicle is to be uploaded.

Specifically, the cloud server sends the feedback information based on the data missing prompt message, where the feedback information includes information indicating whether the collected data on the vehicle is to be uploaded. Those skilled in the art may set the proportion threshold according to practical application situations.

In an implementation, the causes for data missing in the data on the vehicle may include, but are not limited to, a power failure or a fault in the signal on the vehicle or the sensor on the vehicle.

Further, reference is made to FIG. 2, which is a schematic flowchart of main steps of a method for returning data on the vehicle according to another embodiment of the disclosure. As shown in FIG. 2, the method for returning data on the vehicle in this embodiment of the disclosure is applied to a cloud server, and the method mainly includes steps S201 and S202 below.

In step S201, data configuration items are sent to a vehicle, where the data configuration items include scenario parameters and return parameters related to the scenario parameter.

In an implementation, the return parameters include data on the vehicle that needs to be returned for a matched scenario. Preferably, the return parameters further include one or more of the number of daily collection times, a minimum collection time interval, and a return priority of data on the vehicle.

In step S202, data on the vehicle uploaded by the vehicle is received, where the data on the vehicle is obtained by the vehicle, after the vehicle obtains a scenario of a vehicle in real time and matches the scenario with the scenario parameters, based on the return parameters related to the matched scenario parameter when the scenario is successfully matched with the scenario parameters.

In an implementation of this embodiment of the disclosure, step S201 may further include the following steps:
configuring corresponding data configuration items for each of different scenarios in response to an operation performed by a user on a configuration interaction interface of the cloud server.

In this implementation, the cloud server is provided with the configuration interaction interface, which allows a user to set, on the configuration interaction interface, the data configuration items corresponding to the different scenarios. In other words, scenario parameters of various scenarios required, data on the vehicle that needs to be returned for the scenarios, and the corresponding return parameters such as the number of daily collection times, a minimum collection time interval, and a return priority of the data on the vehicle may be flexibly input through the configuration interaction interface.

In an implementation, the configuration interaction interface may be a Web interface.

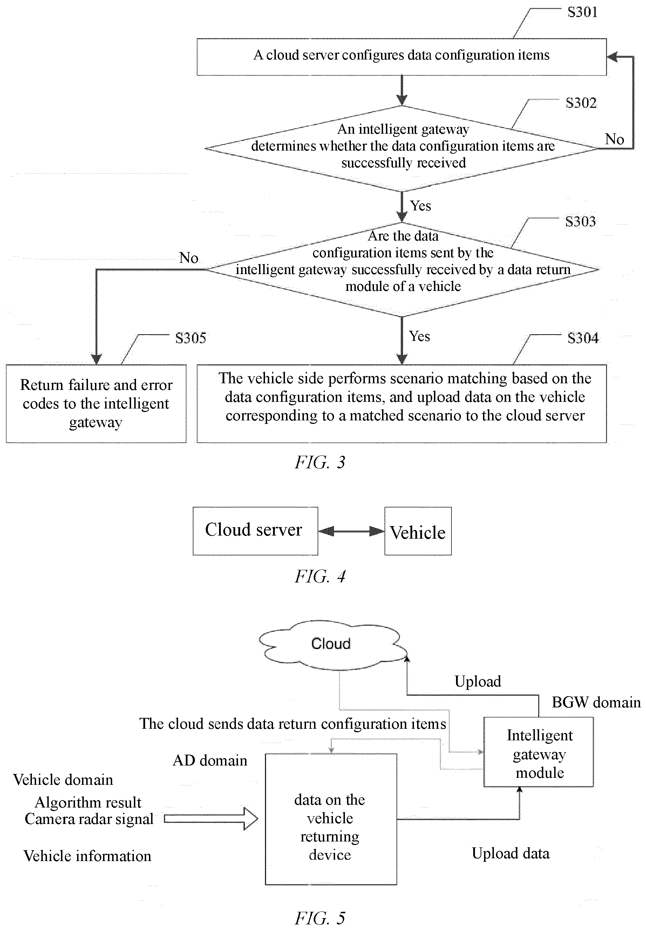

In an implementation, reference may be made to FIG. 3, which is a schematic flowchart of main steps of a method for returning data on the vehicle according to an implementation of this embodiment of the disclosure. As shown in FIG. 3, in this implementation, the method may include step S301 to step S304 below.

In step S301, a cloud server configures data configuration items.

In this implementation, the method in step S301 is similar to that described in step S201. For ease of description, details are not described herein again.

In step S302, an intelligent gateway determines whether the data configuration items are successfully received; and if the data configuration items are successfully received, step S303 is performed; or if the data configuration items fail to be received, step S301 is performed to continue to request the cloud server to configure the data configuration items.

In this implementation, if the intelligent gateway successfully receives the data configuration items sent by the cloud server, step S303 is performed; or if the intelligent gateway fails to receive the data configuration items, step S301 is performed.

In step S303, whether a data return module of a vehicle successfully receives the data configuration items sent by the intelligent gateway is determined; and if the data return module successfully receives the data configuration items, step S304 is performed; or if the data return module fails to receive the data configuration items, step S305 is performed.

In this implementation, the data configuration items sent by the intelligent gateway may be received by the data return module configured on the vehicle.

In step S304, the vehicle performs scenario matching based on the data configuration items and uploads data on the vehicle corresponding to a matched scenario to the cloud server.

In this implementation, the method in step S304 is similar to those described in step S 102 and step S103. For ease of description, details are not described herein again.

In step S305, failure and error codes are returned to the intelligent gateway.

In this implementation, when the data return module of the vehicle fails to receive the data configuration items, the failure and error codes may be returned to the intelligent gateway.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Further, the disclosure further provides a controller on the vehicle. In an embodiment of the controller on the vehicle according to the disclosure, the controller on the vehicle includes at least one processor and a storage apparatus. The storage apparatus may be configured to store a program for executing the method for returning data on the vehicle in the above method embodiment. The processor may be configured to execute a program in the storage apparatus, where the program includes, but is not limited to, the program for executing the method for returning data on the vehicle in the above method embodiment. For ease of description, only parts related to the embodiments of the disclosure are shown. For specific technical details that are not disclosed, reference may be made to the method part of the embodiments of the disclosure. The controller on the vehicle may be a control device formed by various electronic devices.

Further, the disclosure further provides a cloud server. In an embodiment of the cloud server according to the disclosure, the cloud server includes at least one processor and a storage apparatus. The storage apparatus may be configured to store a program for executing the method for returning data on the vehicle in the above method embodiment. The processor may be configured to execute a program in the storage apparatus, where the program includes, but is not limited to, the program for executing the method for returning data on the vehicle in the above method embodiment. For ease of description, only parts related to the embodiments of the disclosure are shown. For specific technical details that are not disclosed, reference may be made to the method part of the embodiments of the disclosure. The cloud server may be a control device formed by various electronic devices.

Further, the disclosure further provides a computer-readable storage medium. In an embodiment of the computer-readable storage medium according to the disclosure, the computer-readable storage medium may be configured to store a program for executing the method for returning data on the vehicle in the above method embodiment, where the program may be loaded and run by a processor to implement the above method for returning data on the vehicle. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In an embodiment of the vehicle according to the disclosure, the vehicle may include the controller on the vehicle in the above controller embodiment on the vehicle.

Further, the disclosure further provides a system for returning data on the vehicle.

FIG. 4 is a block diagram of a main structure of a system for returning data on the vehicle according to an embodiment of the disclosure. As shown in FIG. 4, the system for returning data on the vehicle in this embodiment of the disclosure mainly includes the cloud server in the above cloud server embodiment and the vehicle in the above vehicle embodiment.

In an implementation, the system for returning data on the vehicle may further include an intelligent gateway, where the cloud server sends data configuration items to a controller on the vehicle through the intelligent gateway, and the controller on the vehicle returns data on the vehicle to the cloud server through the intelligent gateway.

In an implementation, the intelligent gateway may be further configured to perform the following steps:
when the data configuration items fail to be received from the cloud server, requesting the cloud server to resend the items; and
when the controller on the vehicle fails to receive the data configuration items, requesting, based on an error code from the controller on the vehicle, the cloud server to resend the items.

In an implementation, reference may be made to FIG. 5, which is a block diagram of a main structure of a system for returning data on the vehicle according to an implementation of this embodiment of the disclosure. As shown in FIG. 5, in this implementation, the system for returning data on the vehicle may include a cloud server (Cloud), an intelligent gateway (BGW domain) module, and a controller in a vehicle AD domain (an advanced autonomous driving system). The controller on the vehicle may be configured to obtain a scenario of the vehicle in real time based on a camera radar signal on the vehicle (a sensor detected signal on the vehicle), vehicle information (a signal on the vehicle), and an algorithm result (a real-time fusion result), and match the scenario of the vehicle with the data configuration items. The intelligent gateway is configured to receive the data configuration items sent by the cloud server and transmit the data configuration items to the controller on the vehicle, and the controller on the vehicle returns the data on the vehicle to the cloud server through the intelligent gateway. The cloud server is configured to send the data configuration items to the intelligent gateway, and receive the data on the vehicle uploaded by the intelligent gateway.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely schematic.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, as disclosed by the appended claims.

## Claims

1. A method for returning data on the vehicle, the method being applied to a vehicle, comprising:
obtaining data configuration items sent by a cloud server, wherein the data configuration items comprise scenario parameters and return parameters related to the scenario parameters (S101);
obtaining a scenario of a vehicle in real time and matching the scenario with the scenario parameters (S102); and
when the scenario is successfully matched with the scenario parameters, uploading corresponding data on the vehicle to the cloud server based on the return parameters related to the matched scenario parameter (S103);
wherein the uploading corresponding data on the vehicle to the cloud server based on the return parameters related to the matched scenario parameter comprises:
collecting and storing the corresponding data on the vehicle based on the return parameters (S1031); and
uploading stored data on the vehicle that needs to be returned for each of different scenarios to the cloud server based on return parameters for the scenario (S1032);
when there is data missing in the collected and stored data on the vehicle, determining whether a proportion of data missing is higher than a preset proportion threshold (S104);
if the proportion of data missing is not higher than the preset proportion threshold, sending a data missing prompt message to the cloud server, and uploading the obtained data on the vehicle to the cloud server based on feedback information from the cloud server (S105); or
if the proportion of data missing is higher than the preset proportion threshold, skipping uploading the data on the vehicle to the cloud server, and sending fault warning information (S106).

2. The method according to claim 1, wherein the return parameters comprise:
the data on the vehicle that needs to be returned for the matched scenario; and
one or more of the number of daily collection times, a minimum collection time interval, and a return priority of the data on the vehicle.

3. The method according to claim 1, wherein
the data on the vehicle comprises a signal on the vehicle and a sensor detected signal on the vehicle; and
the obtaining a scenario of a vehicle in real time comprises:
performing real-time fusion on the signal on the vehicle and the sensor detected signal on the vehicle to obtain the scenario of the vehicle.

4. The method according to claim 3, wherein
the signal on the vehicle comprises at least one of a CAN signal, an RTK signal, and an IMU signal; and
the sensor detected signal on the vehicle comprises detected signals from at least one of a camera on the vehicle, a radar on the vehicle, and a GPS.

5. A system for returning data on the vehicle, comprising a cloud server and a vehicle, wherein the system being configured for:
sending (S201), by the cloud server, data configuration items to the vehicle, wherein the data configuration items comprise scenario parameters and return parameters related to the scenario parameters;
obtaining, by the vehicle, a scenario of a vehicle in real time and matching the scenario with the scenario parameters;
obtaining, by the vehicle, data on the vehicle based on the return parameters related to the matched scenario parameter when the scenario is successfully matched with the scenario parameters;
sending, by the cloud server, feedback information to the vehicle based on a data missing prompt message sent by the vehicle when there is data missing in the data on the vehicle and a proportion of data missing less than or equal to a preset proportion threshold;
uploading, by the vehicle, the obtained data on the vehicle to the cloud server based on the feedback information; and
receiving (S202), by the cloud server, the data on the vehicle.

6. The system according to claim 5, wherein the cloud server is further configured for:
configuring corresponding data configuration items for each of different scenarios in response to an operation performed by a user on a configuration interaction interface of the cloud server.

7. The system according to claim 6, wherein the return parameters comprise:
the data on the vehicle that needs to be returned for the matched scenario; and
one or more of the number of daily collection times, a minimum collection time interval, and a return priority of the data on the vehicle.

8. A controller on the vehicle, comprising at least one processor and a storage apparatus configured to store a plurality of program codes, wherein the program codes are adapted to be loaded and executed by the at least one processor to perform a method according to any one of claims 1 to 4.

## Patentansprüche

1. Verfahren zur Rückgabe von Daten im Fahrzeug, wobei das Verfahren auf ein Fahrzeug angewendet wird, umfassend:
Erhalten von Datenkonfigurationselementen, die durch einen Cloud-Server gesendet werden, wobei die Datenkonfigurationselemente Szenarioparameter und
Rückgabeparameter in Bezug auf die Szenarioparameter umfassen (S101);
Erhalten eines Szenarios eines Fahrzeugs in Echtzeit und Abgleichen des Szenarios mit den Szenarioparametern (S102) und
wenn das Szenario erfolgreich mit den Szenarioparametern abgeglichen wird, Hochladen entsprechender Daten im Fahrzeug auf den Cloud-Server basierend auf den Rückgabeparametern in Bezug auf den abgeglichenen Szenarioparameter (S103);
wobei das Hochladen entsprechender Daten im Fahrzeug auf den Cloud-Server basierend auf den Rückgabeparametern in Bezug auf den abgeglichenen Szenarioparameter umfasst:
Erfassen und Speichern der entsprechenden Daten im Fahrzeug basierend auf den Rückgabeparametern (S1031) und Hochladen gespeicherter Daten im Fahrzeug, die für jedes von verschiedenen Szenarios an den Cloud-Server zurückgegeben werden müssen, basierend auf Rückgabeparametern für das Szenario (S1032);
wenn Daten in den erfassten und gespeicherten Daten im Fahrzeug fehlen, Bestimmen, ob ein Anteil fehlender Daten größer als eine voreingestellte Anteilsschwelle ist (S104);
wenn der Anteil fehlender Daten nicht größer als die voreingestellte Anteilsschwelle ist, Senden einer Aufforderungsnachricht in Bezug auf fehlende Daten an den Cloud-Server und Hochladen der erhaltenen Daten im Fahrzeug auf den Cloud-Server basierend auf Rückkopplungsinformationen vom Cloud-Server (S105) oder wenn der Anteil fehlender Daten größer als die voreingestellte Anteilsschwelle ist, Nichthochladen der Daten im Fahrzeug auf den Cloud-Server und Senden von Fehlerwarninformationen (S106).

2. Verfahren nach Anspruch 1, wobei die Rückgabeparameter umfassen:
die Daten im Fahrzeug, die für das abgeglichene Szenario zurückgegeben werden müssen; und
eine oder mehrere der Anzahl täglicher Erfassungszeiten, ein Mindesterfassungszeitintervall und eine Rückgabepriorität der Daten im Fahrzeug.

3. Verfahren nach Anspruch 1, wobei
die Daten im Fahrzeug ein Signal im Fahrzeug und ein sensordetektiertes Signal im Fahrzeug umfassen und
das Erhalten eines Szenarios eines Fahrzeugs in Echtzeit umfasst:
Durchführen einer Echtzeitfusion am Signal im Fahrzeug und am sensordetektierten Signal im Fahrzeug, um das Szenario des Fahrzeugs zu erhalten.

4. Verfahren nach Anspruch 3, wobei
das Signal im Fahrzeug mindestens eines von einem CAN-Signal, einem RTK-Signal und einem IMU-Signal umfasst und das sensordetektierte Signal im Fahrzeug detektierte Signale von mindestens einem von einer Kamera im Fahrzeug, einem Radar im Fahrzeug und einem GPS umfasst.

5. System zur Rückgabe von Daten im Fahrzeug, umfassend einen Cloud-Server und ein Fahrzeug, wobei das System ausgelegt ist zum:
Senden (S201), durch den Cloud-Server, von Datenkonfigurationselementen an das Fahrzeug, wobei die Datenkonfigurationselemente Szenarioparameter und Rückgabeparameter in Bezug auf die Szenarioparameter umfassen;
Erhalten, durch das Fahrzeug, eines Szenarios eines Fahrzeugs in Echtzeit und Abgleichen des Szenarios mit den Szenarioparametern;
Erhalten, durch das Fahrzeug, von Daten im Fahrzeug basierend auf den Rückgabeparametern in Bezug auf den abgeglichenen Szenarioparameter, wenn das Szenario erfolgreich mit den Szenarioparametern abgeglichen wird;
Senden, durch den Cloud-Server, von Rückkopplungsinformationen an das Fahrzeug basierend auf einer Aufforderungsnachricht in Bezug auf fehlende Daten, die durch das Fahrzeug gesendet wird, wenn Daten in den Daten im Fahrzeug fehlen und ein Anteil fehlender Daten kleiner oder gleich einer voreingestellten Anteilsschwelle ist;
Hochladen, durch das Fahrzeug, der erhaltenen Daten im Fahrzeug auf den Cloud-Server basierend auf den Rückkopplungsinformationen und
Empfangen (S202), durch den Cloud-Server, der Daten im Fahrzeug.

6. System nach Anspruch 5, wobei der Cloud-Server ferner ausgelegt ist zum:
Konfigurieren entsprechender Datenkonfigurationselemente für jedes von verschiedenen Szenarios als Reaktion auf einen Vorgang, der durch einen Benutzer auf einer Konfigurationsinteraktionsschnittstelle des Cloud-Servers durchgeführt wird.

7. System nach Anspruch 6, wobei die Rückgabeparameter umfassen:
die Daten im Fahrzeug, die für das abgeglichene Szenario zurückgegeben werden müssen; und
eine oder mehrere der Anzahl täglicher Erfassungszeiten, ein Mindesterfassungszeitintervall und eine Rückgabepriorität der Daten im Fahrzeug.

8. Steuergerät im Fahrzeug, umfassend mindestens einen Prozessor und eine Speichereinrichtung, die dazu ausgelegt ist, eine Vielzahl von Programmcodes zu speichern, wobei die Programmcodes angepasst sind, um durch den mindestens einen Prozessor geladen und ausgeführt zu werden, um ein Verfahren nach einem der Ansprüche 1 bis 4 durchzuführen.

## Revendications

1. Procédé pour renvoyer des données concernant un véhicule, le procédé étant appliqué à un véhicule, comprenant les faits :
d'obtenir des éléments de configuration de données envoyés par un serveur en nuage, dans lequel les éléments de configuration de données comprennent des paramètres de scénario et des paramètres de renvoi connexes aux paramètres de scénario (S101) ;
d'obtenir un scénario d'un véhicule en temps réel et d'assortir le scénario aux paramètres de scénario (S102) ; et
lorsque le scénario est assorti avec succès aux paramètres de scénario, de télécharger en amont des données correspondantes concernant le véhicule sur le serveur en nuage, sur la base des paramètres de renvoi connexes au paramètre de scénario assorti (S103) ;
dans lequel le fait de télécharger en amont des données correspondantes concernant le véhicule sur le serveur en nuage, sur la base des paramètres de renvoi connexes au paramètre de scénario assorti comprend les faits :
de collecter et de stocker les données correspondantes concernant le véhicule, sur la base des paramètres de renvoi (S1031) ; et
de télécharger en amont des données stockées concernant le véhicule, qui doivent être renvoyées pour chacun de différents scénarios, sur le serveur en nuage, sur la base de paramètres de renvoi pour le scénario (S1032) ;
lorsqu'il y a des données manquantes dans les données collectées et stockées concernant le véhicule, de déterminer si une proportion de données manquantes est plus élevée qu'un seuil de proportion prédéfini (S104) ;
si la proportion de données manquantes n'est pas plus élevée que le seuil de proportion prédéfini, d'envoyer un message d'invite de données manquantes au serveur en nuage, et de télécharger en amont les données obtenues concernant le véhicule sur le serveur en nuage, sur la base d'informations de rétroaction provenant du serveur en nuage (S105) ; ou
si la proportion de données manquantes est plus élevée que le seuil de proportion prédéfini, de renoncer à télécharger en amont les données concernant le véhicule sur le serveur en nuage, et d'envoyer des informations d'avertissement de défaillance (S106).

2. Procédé selon la revendication 1, dans lequel les paramètres de renvoi comprennent :
les données concernant le véhicule qui doivent être renvoyées pour le scénario assorti ; et
un ou plusieurs renseignements parmi le nombre d'événements de collecte quotidiens, un intervalle de temps de collecte minimum, et une priorité de renvoi des données concernant le véhicule.

3. Procédé selon la revendication 1, dans lequel les données concernant le véhicule comprennent un signal concernant le véhicule et un signal détecté par capteur concernant le véhicule ; et
le fait d'obtenir un scénario d'un véhicule en temps réel comprend :
le fait de réaliser une fusion en temps réel sur le signal concernant le véhicule et sur le signal détecté par capteur concernant le véhicule pour obtenir le scénario du véhicule.

4. Procédé selon la revendication 3, dans lequel le signal concernant le véhicule comprend au moins un signal parmi un signal CAN, un signal RTK, et un signal IMU ; et
le signal détecté par capteur concernant le véhicule comprend des signaux détectés provenant d'au moins un composant parmi une caméra sur le véhicule, un radar sur le véhicule, et un GPS.

5. Système pour renvoyer des données concernant un véhicule, comprenant un serveur en nuage et un véhicule, dans lequel le système étant configuré pour :
envoyer (S201), par le serveur en nuage, des éléments de configuration de données au véhicule, dans lequel les éléments de configuration de données comprennent des paramètres de scénario et des paramètres de renvoi connexes aux paramètres de scénario ;
obtenir, par le véhicule, un scénario d'un véhicule en temps réel et assortir le scénario aux paramètres de scénario ;
obtenir, par le véhicule, des données concernant le véhicule, sur la base des paramètres de renvoi connexes au paramètre de scénario assorti lorsque le scénario est assorti avec succès aux paramètres de scénario ;
envoyer, par le serveur en nuage, des informations de rétroaction au véhicule, sur la base d'un message d'invite de données manquantes envoyés par le véhicule lorsqu'il y a des données manquantes dans les données concernant le véhicule et une proportion de données manquantes inférieure ou égale à un seuil de proportion prédéfini ;
télécharger en amont, par le véhicule, les données obtenues concernant le véhicule sur le serveur en nuage, sur la base des informations de rétroaction ; et
recevoir (S202), par le serveur en nuage, les données concernant le véhicule.

6. Système selon la revendication 5, dans lequel le serveur en nuage est en outre configuré pour :
configurer des éléments de configuration de données correspondants pour chacun de différents scénarios en réponse à une opération réalisée par un utilisateur sur une interface d'interaction de configuration du serveur en nuage.

7. Système selon la revendication 6, dans lequel les paramètres de renvoi comprennent :
les données concernant le véhicule qui doivent être renvoyées pour le scénario assorti ; et
un ou plusieurs renseignements parmi le nombre d'événements de collecte journaliers, un intervalle de temps de collecte minimum, et une priorité de renvoi des données concernant le véhicule.

8. Unité de commande sur véhicule, comprenant au moins un processeur et un appareil de stockage configuré pour stocker une pluralité de codes de programme, dans lequel les codes de programme sont adaptés pour être chargés et exécutés par l'au moins un processeur pour réaliser un procédé selon l'une quelconque des revendications 1 à 4.
